# EUROPEAN PATENT APPLICATION

(11) **EP 4 385 336 A1**
(43) Date of publication of application: **19.06.2024**
(21) Application number: 24153747.1
(22) Date of filing: 08.07.2022
(51) Int. Cl.: A23L 2/38, C12C 11/00, A23C 11/10, C12C 1/18, C12C 7/00, C12C 7/14, C12C 7/165, C12C 7/17, A23J 1/12, C12F 3/06, A23J 1/00, A23L 2/52

(54) **A METHOD FOR PRODUCTION OF BEVERAGES**

(30) Priority: 13.07.2021 EP 21185314
(62) Divisional of application: 22183844.4
(71) Applicant: Tetra Laval Holdings & Finance S.A., 1009 Pully (CH)
(72) Inventor: Börjesson, Erik, 22186 Lund (SE); Stanic, Mirko, 8152 Glattbrugg (CH); Lindau, Jeanette, 22186 Lund (SE); Paul, Bernardo, 22186 Lund (SE); Phinney, Randi, 22186 Lund (SE)
(74) Representative: Tetra Pak - Patent Attorneys SE

(57) **Abstract**

A method for combined production of beer and a non-fermented beverage from grain material makes use of a by-product in the beer production to produce the non-fermented beverage and thereby improves resource-efficiency. The method comprises processing (301) the grain material into a mash; separating (302) the mash into a fermentable wort and a retentate; processing (303) a retentate material into a slurry, wherein the retentate material comprises at least a portion of the retentate; separating (304) the slurry into a liquid component and a solid component; processing (305) the liquid component into the non-fermented beverage; processing (306) the fermentable wort into the beer; outputting (307) the non-fermented beverage; and outputting (309) the beer.

## Description

### Technical Field

The present disclosure generally relates to the field of beverage production, and in particular to resource-efficient production of beer and non-fermented beverage.

### Background Art

Plants for beer production come in many forms, ranging from small plants at craft breweries or microbreweries to plants that produce beer on an industrial scale. Brewing of beer comprises at least three main steps: mashing, lautering, and fermenting. Mashing is a process of mixing milled, usually malted, grain with water, and heating it with rests at controlled temperatures to allow enzymes to break down the starches in the grain into sugars such as maltose. The mashing results in a mash. Lautering is a process of separating the mash into a fermentable wort and retentate. Lautering may be achieved in a lauter tun or a mash filter. Fermentation begins when yeast is added to the wort. This is also the point at which the product is first called beer. During this stage, fermentable sugars in the wort are metabolized into alcohol and carbon dioxide.

The retentate from the lautering is a by-product of brewing and is also known as draff or brewer's spent grain. It is produced in large quantities in a beer production plant, for example 15 kg per 100 liter beer. The retentate is highly nutritious and contains proteins, fibers, and carbohydrates. At the same time, the retentate is rapidly degraded by microbiological activity and may be spoilt within hours after the lautering. At present, the retentate is used as animal feed or as raw material for production of biogas. It has also been proposed, for example in WO2019/023647, to process the retentate by drying and milling into a protein-rich flour. However, large quantities of retentate are discarded in today's plants for beer production.

### Summary

It is an objective to at least partly overcome one or more limitations of the prior art.

One such objective is to improve resource-efficiency in production of beer.

Another objective is to provide a technique of producing a non-fermented beverage in compliance with food safety regulations based on retentate from beer production.

A further objective is to provide such a technique that is simple to integrate with existing beer production and that allows flexibility in production.

One or more of these objectives, as well as further objectives that may appear from the description below, are at least partly achieved by a method of combined production of beer and a non-fermented beverage from grain material according to the independent claim, embodiments thereof being defined by the dependent claims.

One aspect of the invention is a method of combined production of beer and a non-fermented beverage from grain material. The method comprises: processing the grain material into a mash; separating the mash into a fermentable wort and a retentate; processing a retentate material into a slurry, wherein the retentate material comprises at least a portion of the retentate; separating the slurry into a liquid component and a solid component; processing the liquid component into the non-fermented beverage; processing the fermentable wort into the beer; outputting the non-fermented beverage; and outputting the beer.

The first aspect produces two beverages from a single starting material. The method integrates production of a non-fermented beverage with production of beer by making use of retentate that is separated from the mash in the beer production. The retentate is a by-product that beer manufacturers regularly store and subsequently discard, often by paying a fee for its disposal. By the method, at least part of the retentate is consumed within the beer production plant to produce a non-fermented beverage that is in high demand in today's society. The non-fermented beverage is a plant-based beverage that may be produced to fall within the type of beverage known as "plant milk". Plant milks are vegan beverages consumed as plant-based alternatives to dairy milk, and often provide a creamy mouthfeel. Plant milk is also known as alternative milk, mock milk, or vegan milk. The method of the first aspect is capable of producing a non-fermented beverage which is high in protein content and thus suitable for vegans or other people seeking an alternative source of protein.

Embodiments of the first aspect enable additional technical advantages, for example in terms of energy efficiency, compliance with food safety regulations, flexibility in production, etc.

Still other objectives, aspects as well as features, embodiments and technical advantages will appear from the following detailed description as well as from the drawings.

### Brief Description of the Drawings

Fig. 1 is a plan view of an example plant for production of beer and non-fermented beverage.
Figs 2A-2B are example timing diagrams of procedures in combined production of beer and non-fermented beverage.
Fig. 3 is an example method of combined production of beer and non-fermented beverage.
Fig. 4A is a flow chart of a procedure of producing non-fermented beverage in the method in Fig. 3 in accordance with a first example.
Fig. 4B is a plan view a production line for producing non-fermented beverage in accordance with the first example.
Fig. 5A is a flow chart of a procedure of producing non-fermented beverage in the method of Fig. 3 in accordance with a second example.
Fig. 5B is a plan view a production line for producing non-fermented beverage in accordance with the second example, and Fig. 5C is a plan view of an example yield enhancing station in the production line of Fig. 5B.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, "grain material" refers to any cereal or combination of cereals used or useful for production of beer. Cereals may be used for brewing beer either after being malted or as unmalted starch adjunct. Barley is the main raw material used for production of beer, but corn, rice, and wheat are also commonly used. Other examples of grain material include barley, sorghum, millet, oats, rye, triticale, and fonio. As used herein, the term cereal also includes pseudo-cereals such as buckwheat.

As used herein, "slurry" refers to a mixture of solids denser than water suspended in liquid.

A range that is defined to extend from a first value to a second value is intended to include the first and second values.

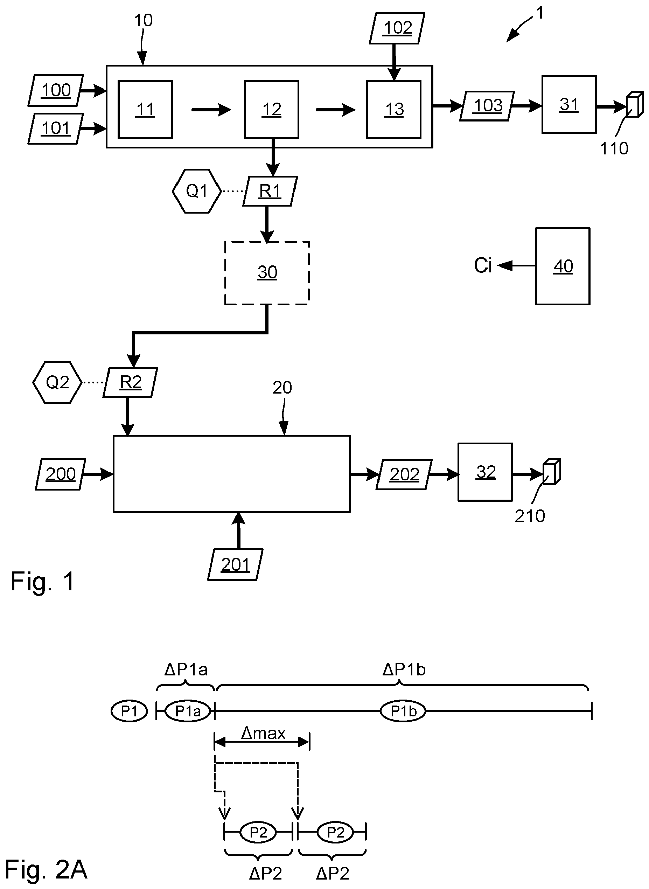

Fig. 1 is a schematic block diagram of a plant 1 for combined production of beer and non-fermented beverage. The non-fermented beverage is produced without fermentation, whether achieved by addition of yeast or lactic acid bacteria. Generally, the non-fermented beverage is a so-called ready-to-serve (RTS) type beverage. In some embodiments, the non-fermented beverage is produced without addition of alcohol and is thus non-alcoholic. In some embodiments, the non-fermented beverage is a plant milk, as defined in the summary section. In the following, the non-fermented beverage is abbreviated NFB.

The plant 1 comprises a production line 10 for beer, and a production line 20 for NFB. The production line 20 is configured to produce the NFB by use of a by-product from the production line 10. This by-product is produced as a retentate R1 from a filtration process in line 10. Specifically, the retentate R1 contains all solids that have been separated from the wort by filtration. The retentate R1 mainly comprises pericarp and hull portions and other non-starchy portions of the grain material that is used as raw material for the beer production by line 10. As noted in the background section, the retentate R1 is sometimes denoted draff or brewer's spent grain (BSG).

The beer production line 10 is of conventional construction and is configured to process water 100 and grain material 101 into beer 103, by addition of yeast 102. In the illustrated example, the line 10 comprises a mashing station 11, a filtration station 12, and a fermentation station 103. The mashing station 11 is configured to receive the water 100 and the grain material 101, and optionally one or more further ingredients. The mashing station mixes the water and the grain material to form an enzyme-containing mash. The enzymes may originate from the grain material or be added separately to the mash. In the mashing station 11, the enzymes are allowed to break down starch into fermentable sugars, for example a mixture of glucose, maltose and maltotriose. The mash generated by the mashing station 11 is transferred to the filtration station 12, which is configured to separate the mash into a wort comprising the fermentable sugars, and spent grain, i.e. the above-mentioned retentate R1. The process of separating the spent grain from the wort is known as "wort separation", which may be performed by lautering, in which the grain bed itself serves as the filter medium, and/or by the use of filter frames.

The retentate R1 mainly comprises fibers, which are non-starch polysaccharides and significant quantities of proteins and lignin, with arabinoxylans (AX) typically constituting the most abundant component. Thus, R1 is basically a lignocellulosic material. Typically, about half of R1 comprises fibers on a dry weight basis. Up to about 30% of R1 on a dry weight basis may comprise proteins, for example hordeins, glutelins, globulins and albumins. Essential amino acids may represent approximately 30% of the total protein content, with lysine being the most abundant. Cellulose is typically an abundant polysaccharide in R1. Monosaccharides in R1 may include xylose, glucose, and arabinose. In addition, R1 may contain a variety of minerals, such as silicon, phosphorus, calcium, and magnesium.

The wort is transferred from the filtration station 12 to the fermentation station 13, in which fermentation is started by addition of yeast 102. In the fermentation station 13, the wort becomes beer in a process that may require a week to months depending on the type of yeast and strength of the beer. In addition to producing ethanol, fine particulate matter suspended in the wort settles during fermentation. Once fermentation is complete, beer 103 is output from the fermentation station 13.

It should be understood that the production line 10 in Fig. 1 is merely given as a non-limiting example. The stations 11-13 may be configured to perform additional processing and/or the line 10 may include additional stations for such additional processing, for example flavoring of the wort, heating of the wort, cooling of the wort, filtration of the beer, maturation of the beer, etc. The plant 1 may comprise more than one beer production line 10 and such production lines 10 may share equipment.

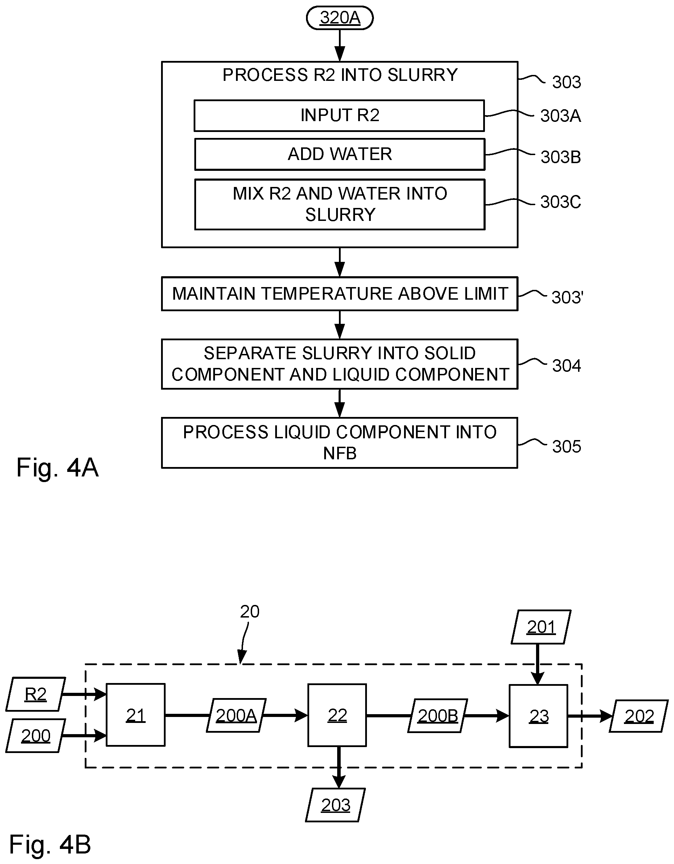

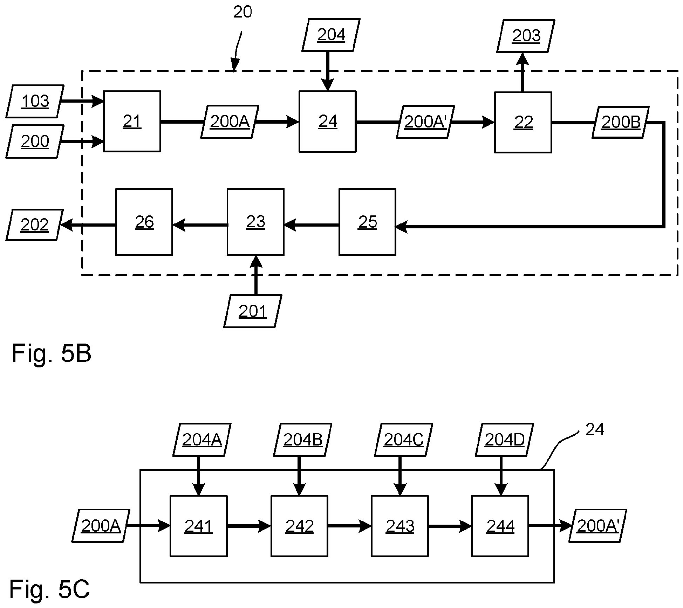

The NFB production line 20 may or may not be constructed similar to conventional lines for production of plant milk. Example configurations of the production line 20 are presented further below with reference to Figs 4B, 5B and 5C. The line 20 is configured to process water 200 and retentate material R2 into NFB 202, by optional addition of one or more further ingredients 201, for example to achieve a desired flavor and/or mouthfeel. The retentate material R2 comprises at least part of the retentate R1 from the beer production line 10, subject to one or more constraints, as will be described further below. The plant 1 may comprise more than one NFB production line 20 and such production lines 20 may share equipment.

As shown in Fig. 1, the plant 1 may comprise a beer packaging station 31, which is arranged to receive the beer 103 from the production line 10 and fill the beer into first containers 110. The first containers 110 may be configured for batch distribution (for example, casks or kegs) or for direct consumption (for example, cans or bottles). The plant 1 may further comprise an NFB packaging station 32, which is arranged to receive the NFB 202 from the production line 20 and fill the NFB into second containers 210. The second containers 210 may or may not be aseptic or semi-aseptic. The second containers 110 may be configured for batch distribution or for direct consumption. In some embodiments, the second containers 210 are consumer packages of any type, including but not limited to bottles of glass or plastic, metal cans, or carton-based packages, which may be sealed for subsequent distribution.

Although not shown in Fig. 1, the plant 1 may comprise dedicated storage tanks for storing beer and/or NFB in preparation of packaging.

The plant 1 in Fig. 1 comprises a control system 40, which is configured to generate control signals Ci for equipment within the plant 1, including equipment in the production lines 10, 20. For example, the control system 40 may control various process parameters within the respective line, such as degree of mixing, residence time, temperature, pressure, addition of ingredients, etc. However, at least some of the processing steps to produce the beer and the NFB, respectively, may be manually performed and/or controlled by an operator.

The retentate R1 is produced in large quantities by the beer production line 10. Typically, about 100-130 kg of retentate R1 is obtained from 100 kg of grain material, equating to about 15-20 kg retentate per hectoliter beer. Properties of R1 are represented by Q1 in Fig. 1. It is to be noted that R1 refers to the retentate directly after its production by line 10. The main component in R1 is water, which is mainly contained within the spent grains in R1. Generally, the relative water content in R1 is in the range of 60% to 90%, corresponding to total solids (TS) in the range of 10% to 40%. In practice, the relative water content in R1 is often in the range of 70% to 85%, corresponding to TS in the range of 15% to 30%. R1 is produced with a temperature in a range of 55°C to 90°C. This refers to the average temperature of R1, given that there may be temperature variations within a batch of retentate produced by line 10. In practice, the temperature of R1 is typically above 65°C or above 70°C, and preferably below 85°C or below 80°C. The rich polysaccharide and protein content and the high moisture content of R1, and its temperature, make R1 susceptible to microbial growth and spoilage. Thus, while R1 may be microbiologically stable and within acceptable limits for food use when produced by the line 10, proliferation of microaerophilic bacteria and anaerobes make the microflora in R1 prone to rapid change. Since the NFB is intended for human consumption, it is imperative that the retentate material R2 complies with food safety regulations, which include limitations on the presence of bacteria and toxins. The plant 1 in Fig. 1 facilitates compliance with such regulations since the NFB production line 20 is located in the same physical facility as the beer production line 10. Specifically, the time from output of R1 from line 10 to input of R2 to line 20 may be limited.

It is to be noted that line 10 produces retentate in batches, while line 20 may or may not consume R2 in batches. Depending on the respective capacity of the lines 10, 20, R2 may comprise all of R1, or only a portion thereof.

In Fig. 1, block 30 represents optional equipment in the plant 2 for transferring, storing, or processing R1. In some embodiments, block 30 comprises a fixed installation for transferring at least part of R1 from line 10 to line 20. Such a fixed installation may include one or more screw conveyors, piping, one or more pumps, etc. The fixed installation may also comprise a diversion mechanism, which is configured to ensure that the required amount of R2 is received at line 20 by diverting part of R1, for example to a separate storage (not shown) or to another production line (not shown) for producing NFB or another product based on the thus-diverted R1. However, in some embodiments, the transfer of retentate from line 10 to line 20 may be performed without a fixed installation, for example by carts or trays on wheels, which may or may not be motorized. In some embodiments, block 30 comprises an intermediate storage for storing retentate. In some embodiments, the block 30 comprises equipment for stabilizing the retentate by reducing its microbiological activity. Such stabilization may be achieved by one or more of heating the retentate, cooling the retentate, drying the retentate, or changing the pH of the retentate by acidification or alkalization.

In some embodiments, such stabilization is omitted. Thus, R2 is produced without any active processing of R1 for modification of its properties. As used herein, "active processing" implies a supply of energy and/or one or more substances. By obviating active processing, the construction and operation of the plant 1 may be simplified and the cost of production may be kept down. The lower cost of production is not only due to lower consumption of energy and/or substance(s), but also a reduced need for cleaning and maintenance of the stabilization equipment.

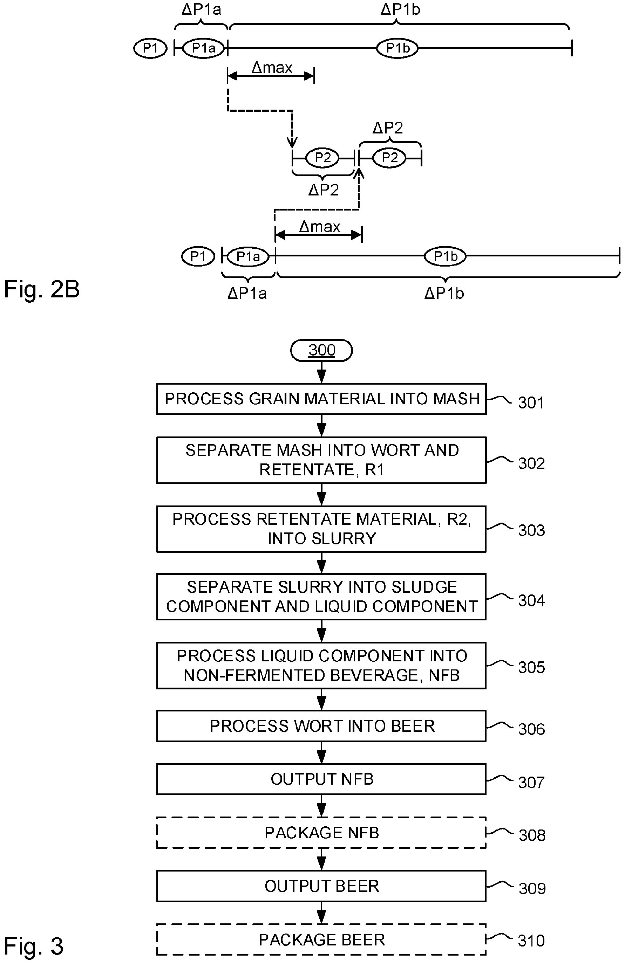

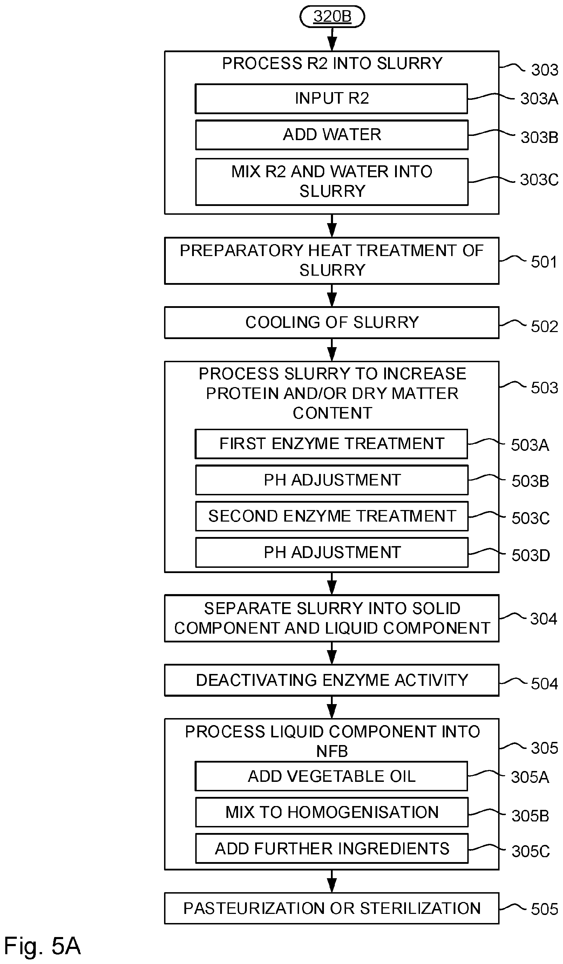

Fig. 3 is a flow chart of an example method 300 for combined production of beer and NFB. By way of example, the method 300 will be described with reference to the plant 1 in Fig. 1. In step 301, grain material is processed into a mash, for example in the mashing station 11. In step 302, the mash is separated into a fermentable wort and a retentate, for example in the filtration station 12. Step 302 thereby produces R1. In step 303, the retentate material R2 is processed into a slurry. As described above, R2 comprises at least a portion of R1. It may be noted that step 303 forms a starting point of the procedure of producing NFB. In step 304, the slurry is separated into a liquid component and a solid component. The solid component is sludge and may be discarded. In step 305, the liquid component is processed into NFB, for example in accordance with example procedures described below with reference to Fig. 4A and Fig. 5A. Steps 303-305 may be performed by the production line 20 in Fig. 1. In step 306, the fermentable wort is processed into beer, for example in the fermentation station 13. Step 306 may be performed in accordance with any conventional procedure and is started by addition of yeast to the wort. In step 307, the NFB is output from production line 20. In an optional step 308, the NFB is packaged, for example in the second packaging station 32. In step 309, the beer is output from production line 10. In an optional step 310, the beer is packaged, for example in the first packaging station 31. The example method 300, by involving a combined production of beer and NFB, facilitates compliance with food safety regulations by enabling control of the properties of R2.

Reverting to Fig. 1, properties of R2 are represented by Q2. It is to be noted that R2 refers to the retentate material when supplied to line 20, i.e. when the NFB production procedure is started by step 303. The present Applicant has identified constraints for Q2 that are believed to provide distinct technical advantages. These constraints will be presented in terms of combinable embodiments in the following.

In some embodiments, the properties Q2 of R2 are approximately identical to the properties Q1 of R1. In this context, approximately identical implies a difference in each property of less than ±10%, and preferably less than ±5%.This implies that R1 is not subject to active processing to produce R2 and that the time from output of R1 to input of R2 is limited.

In some embodiments, R2 has approximately the same relative water content as R1, for example within about ±10%. This implies that R1 is not subject to active drying to produce R2.

In some embodiments, R2 has a relative water content in a range of 60% to 90%, and preferably in a range of 70% to 85%. Again, this implies that R1 is not subject to active drying to produce R2.

In some embodiments, R2 has a temperature in a range of 40°C to 99°C, preferably above 50°C or above 55°C, and preferably below 85°C or below 80°C. It is realized that even in the absence of active cooling, the temperature of the retentate will decrease over time. By restricting the temperature to above 40°C, and preferably above 50°C or above 55°C, the growth of harmful bacteria in R2 is prevented or at least mitigated. By restricting the temperature to below 99°C, and preferably below 85°C or below 80°C, the energy consumption for active heating of the retentate is reduced or even obviated.

In some embodiments, R2 has a temperature that is equal to or less than the temperature of R1. This implies that R1 is not subject to active heating to produce R2.

In some embodiments, the temperature difference between R2 and R1 is less than 15°C, and preferably less than 10°C or less than 5°C. This implies that R1 is not subject to active heating or cooling to produce R2.

In some embodiments, the pH of R2 is equal to or less than the pH of R1. This allows for active acidification of the retentate for stabilization. However, even in the absence of active acidification, the pH may be lower in R2 than in R1 as a result of natural processes in the retentate.

In some embodiments, the pH of R2 is in the range of 5-7. Such a pH range is currently believed to be suitable for production of NFB in the line 20.

In some embodiments, the pH difference between R2 and R1 is less than 1, and preferably less than 0.6, 0.4 or 0.2. This implies that R1 is not subject to active acidification or alkalization to produce R2.

Fig. 2A is a timing diagram of a procedure P1 for production of beer and a procedure P2 for production of NFB in accordance with the method 300 in Fig. 3. In the plant 1 of Fig. 1, P1 may be performed by line 10 and P2 may be performed by line 20. The procedure P1 is divided in a first sub-procedure P1a and a second sub-procedure P1b. The first sub-procedure P1a ends when R1 is output. The second sub-procedure P1b starts when P1a ends and ends when the beer is output (cf. step 309 in Fig. 3). P1b substantially corresponds to step 305, in which the wort is processed into beer. The duration of P1a is designated by ΔP1a, and the duration of P1b is designated by ΔP1b. Beer production is a slow process and ΔP1b is quite long, typically at least 4 days. It not uncommon for ΔP1b to be in the range of 4-14 days, although it may be longer, for example 1 month or more. In Fig. 2A, the duration of P2 is designated by ΔP2. P2 starts when processing of R2 is initiated (step 303) and ends when the NFB is output (step 307).

In some embodiments, the method 300 may apply a predefined maximum time for the time period between the generation of R1 in step 302 and the start of processing of R2 in step 303. Thus, in accordance with such embodiments, the method 300 is required to start the processing of R2, which contains at least part of R1, no later than the maximum time after R1 has been produced. In Fig. 2A, the maximum time is designated by Δmax and extends from the end of P1a. The maximum time may be defined to ensure that the quality of R2 is sufficient to result in an NFB that fulfills food safety requirements. In some embodiments, Δmax is equal to or less than 8 hours. Such a Δmax is currently believed to obviate the need to stabilize the retentate by active processing. However, it is conceivable that the method 300 applies a more restrictive Δmax. For example, Δmax may be equal to or less than 6, 4 or 2 hours.

In the example of Fig. 2A, the method 300 is configured with ΔP2 shorter than Δmax. Having ΔP2 equal to or shorter than Δmax provides flexibility in production. For example, as indicated by dashed arrows in Fig. 2A, it allows retentate material R2 from the same batch of retentate to be used as raw material in procedures P2 that are performed in sequence to produce NFB. This may be a significant advantage in view of the large amount of retentate that is produced for a single batch of beer, at least in large scale beer production, since it increases the amount of retentate material that one and the same production line 20 is capable of inputting from a beer production line 10 without violating the constraint Δmax. While not shown in Fig. 2A, it should be understood that two or more procedures P2 may be performed in parallel to input retentate material R2 produced by the sub-procedure P1a.

In some embodiments, for example as shown in Fig. 2A, the method 300 is configured with ΔP2 being shorter than ΔPb1, and preferably much shorter. This corresponds to NFB being output (step 307) before the processing of the wort into beer is completed. Such embodiments provide flexibility in production, for example by allowing one and the same production line 20 to receive retentate material R2 from two or more beer production lines 10. Fig. 2B is a timing diagram of two procedures P1 for beer production that are performed in overlapping fashion by two different production lines 10. As indicated by dashed arrows, retentate material R2 from the two procedures P1 may be used as raw material in sequential procedures P2 for production of NFB, which may be performed by one and the same production line 20. By proper timing between the procedures P1, one and the same production line 20 is capable of processing retentate material R2 from plural beer production lines 10 without violating the constraint Δmax.

It may also be noted that the embodiments illustrated in Figs 2A-2B make it possible to perform and complete the packaging of NFB (step 308) before the packaging of the beer (step 310). This may enable optimization of packaging resources, for example by use of at least partly the same equipment for packaging both NFB and beer. In the example of Fig. 1, the first and second packaging stations 31, 32 may share equipment or even be implemented by the same physical station. To the extent that the same equipment/station is used, the embodiments in Figs 2A-2B may provide time for cleaning the equipment/station before the switch from NFB to beer. The packaging of NFB before beer may also reduce the need for staffing in the plant, by reducing the need for parallel packaging of beer and NFB. In some embodiments, the packaging of NFB is performed 1-1,000 hours before the packaging of the beer, at typically at least 24-48 hours before the packaging of the beer.

Fig. 4A is a flow chart of a first example procedure 320A for producing NFB, for example as part of the method 300 in Fig. 3. The procedure 320A provides a simple yet effective technique of producing non-fermented beverage, NFB, from retentate material, R2. The procedure 320A may be performed by the production line 20 in Fig. 1 and comprises steps 303, 303', 304, 305 which are performed in sequence. The procedure 320A may correspond to the procedure P2 in Figs 2A-2B. In Fig. 4A, the step 303 of processing R2 into a slurry comprises inputting R2 (step 303A), adding water (step 303B) and mixing R2 and water into the slurry (step 303C). Steps 303A-303C may be performed in a mixing arrangement, for example a tank with an integrated or attached mixing device, such as a recirculation system and/or a rotor or impeller. In some embodiments, the mixing arrangement comprises a heating device for heating the contents of the tank, for example by direct injection of steam or by circulating a heating medium in a jacket on the tank, as is well known in the art. As understood from the foregoing, R2 contains particles that are generated when the grain material is processed into a mash in step 301 (Fig. 3). The mixing in step 303C will cut these particles into smaller particles that are suspended in the water added in step 303B. The amount water added in step 303B depends on the desired TS of NFB as well as the TS of R2. In a non-limiting example, the TS of the NFB may be in the range of 6%-15%, and preferably 5%-12%. Steps 303A-303C may be performed in different order. For example, water may be added before R2. Further, R2 and water may be added in batches, and the mixing may be performed for each batch.

It should be noted that, by definition, the processing of R2 is initiated by adding water to R2. Thus, as soon as water is added to at least a portion of R1, which thereby constitutes R2, the processing of R2 into NFB is started.

In some embodiments, the water added in step 303B has a temperature above at least 70°C, and preferably above at least 75°C or at least 80°C. This will mitigate growth of microorganisms in the slurry.

In some embodiments, the mixing in step 303C is performed at a temperature above or equal to a minimum temperature, which may be 70°C, and preferably 75°C or 80°C. Further, the temperature during the mixing may be equal to less than a maximum temperature, which may be 100°C. In accordance with these embodiments, the temperature in the mixture of R2 and water is thus maintained in the temperature range defined by the minimum and maximum temperatures throughout the mixing step. Apart from mitigating growth of microorganisms, the elevated temperature will lower the viscosity of the mixture.

In some embodiments, as indicated by step 303' in Fig. 4A, the slurry is maintained in the above-mentioned temperature range for a holding time, after mixing, for example to ensure a correct yield of proteins in the slurry. In a non-limiting example, the holding time may be in the range of 1-60 minutes. The longer the holding time, the more important it is to maintain the temperature to counteract microbiological activity in the slurry. Step 303' may be performed in the mixing arrangement, in a dedicated storage tank, or during transfer in preparation of step 304.

The step 304 of separating the slurry into a solid component and a liquid component may be performed in any type of filtration or separation arrangement, for example a decanter. The separation in step 304 will remove solids larger than a minimum size from the slurry. Such solids form a sludge that comprises husks, fibers, and other solid particles. The solid component is typically discarded. In a non-limiting example, the minimum size is in the range of 50-500 µm, for example about 100 µm. In some embodiments, the temperature is maintained in the above-mentioned temperature range also during step 304.

The step 305 of processing the liquid component into NFB is also known as final formulation. Step 305 comprises adding one or more ingredients to the liquid component, and optionally mixing the ingredient(s) with the liquid component. Such ingredients may comprise any of vegetable oil, flavoring, sweetener, salt, thickener, stabilizer, vitamin, or mineral. In some embodiments, step 305 comprises collecting the liquid component generated by step 304 in one or more storage tanks and the admixing of ingredient(s) is performed by use of recirculation mixing in the storage tank(s). Alternatively, batch mixing may be used. In some embodiments, the temperature is maintained in the above-mentioned temperature range also during step 305.

Fig. 4B is a block diagram of an example production line 20 which is configured to perform the procedure 320A in Fig. 4A. The production line 20 comprises a mixing station 21, which is configured to perform step 303. The mixing station 21 may comprise a mixing arrangement as described hereinabove. The mixing station is arranged to receive R2 and water 200 and output a slurry 200A. A separation station 22 is arranged to receive the slurry 200A and configured to perform step 304. The separation station 22 may comprise one or more decanters. By the separation station 22, the slurry 200A is separated into the liquid component 200B and the solid component 203. As noted above, step 303' of maintaining the slurry at a temperature in the above-mentioned temperature range may be performed in the station 21 and/or in piping for transfer of the slurry 200A from station 21 to station 22. A formulation station 23 is arranged to receive the liquid component 200B and configured to perform step 305. The formulation station 23 is configured to admix the above-mentioned ingredient(s) 201 into the liquid component 200B to produce the NFB 202, which is output from the formulation station 23.

Fig. 5A is a flow chart of a second example procedure 320B for producing the NFB, for example as part of the method 300 in Fig. 3. The procedure 320B may be performed by the production line 20 in Fig. 1 and comprises steps 303, 501, 502, 503, 304, 504, 305, 505, which are performed in sequence. The procedure 320B may correspond to the procedure P2 in Figs 2A-2B. Compared to the procedure 320A, the procedure 320B provides a more advanced technique of producing NFB from R2, by including a step dedicated to increasing the protein and/or dry matter content in the NFB by enzymatic treatment. The procedure 302B starts by a step 303 of processing R2 into a slurry. Step 303 may be the same as in the procedure 320A (Fig. 4A). Step 303 is followed by step 501, in which the slurry is subjected to a preparatory heat treatment. In some embodiments, step 501 comprises heating the slurry to a temperature of at least 100°C for a predefined time period, for example to a temperature in the range of 110°C-130°C. In a non-limiting example, the predefined time is in the range of 2-30 minutes, for example at least 15 minutes. The purpose of step 501 is to kill bacteria, viruses, and possibly spores that may be present in the slurry. Step 501 is performed to prepare the slurry for the subsequent enzymatic treatment, in which the slurry is held at lower temperature for an extended time period. In the absence of the heat treatment by step 501, microorganisms may proliferate during the enzymatic treatment and spoil the resulting NFB. In some embodiments, step 501 is performed in a closed heating vessel, under pressurized conditions, similar to the processing in an autoclave. Step 501 is followed by step 502, in which the slurry is cooled to an operating temperature for the enzymatic treatment. Depending on the enzyme(s) used, the operating temperature may be in the range of 40°C-95°C. In one example, the operating temperature is below 70°C. In some embodiments, step 501 and/or step 502 is omitted.

In step 503, the slurry is processed to increase its content of protein and/or dry matter by enzymatic treatment. The enzymatic treatment comprises adding one or more enzymes to the slurry, mixing the respective enzyme with the slurry, and allowing the respective enzyme to break down components of the slurry for a predefined treatment time. The mixture of slurry and enzymes may or may not be mixed during the treatment time. Control parameters of the enzymatic treatment, such as temperature, pH, and treatment time, are adapted to the respective enzyme. The present Applicant has found that it may be advantageous to include at least one of a first enzymatic treatment (step 503A) comprising an enzymatic breakdown of fibers in the slurry, or a second enzymatic treatment (step 503C) comprising an enzymatic breakdown of proteins in the slurry. The first enzymatic treatment may comprise addition of one or more carbohydrases to the slurry. Examples of suitable carbohydrases include arabanase, cellulase, beta-glucanase, hemicellulase, and xylanase. In a non-limiting example, the first enzymatic treatment may be performed at a pH in the range of 3.5-6.0 and at a temperature in the range of 40-70°C. The second enzymatic treatment may comprise addition of one or more proteases to the slurry. Examples of suitable proteases include endo-proteases. In a non-limiting example, the second enzymatic treatment may be performed at a pH in the range of 6-10 and at a temperature in the range of 45-65°C. The present Applicant has surprisingly found that combining the first and second enzymatic treatments has the ability of significantly increasing the yield of protein and/or dry matter in the NFB. The first enzymatic treatment has the ability to break down fibers in the slurry, resulting in proteins and other compounds, and the second enzymatic treatment has the ability to break down proteins into smaller polypeptides or single aminoacids. Thereby, the first enzymatic treatment is capable of enhancing the yield of the second enzymatic treatment.

In Fig. 5A, step 503 comprises such a combined enzymatic treatment, which may be performed in one or more tanks, which may or may not include one or more mixing devices. The first enzymatic treatment 503A is performed for a first treatment time, for example in the range of 1-6 hours. Step 503A is followed by a step 503B of adjusting the pH for the second enzymatic treatment. As noted above, proteases may operate better at a higher pH than carbohydrases. Thus, step 503B may be performed to increase the pH of the slurry, for example by addition of alkali or lye to the slurry. When the pH has been adjusted by step 503B, the second enzymatic treatment 503C is performed for a second treatment time, for example in the range of 1-6 hours. It is realized that the first enzymatic treatment may continue during the second treatment time. Depending on implementation, step 503C may be followed by a further pH adjustment, in step 503D, for example to lower the pH by addition of acid or acid salt.

Step 503 is followed by the step 304 of separating the liquid component from the slurry. Step 304 may be the same as in the procedure 320A (Fig. 4A). After step 304, the liquid component is processed in step 504 to deactivate the enzymes that were added to the slurry in step 503. Step 504 may be performed in any conventional way, for example by heating the liquid component and holding the heated liquid component for a predefined time period, for example in the range of 10-600 seconds. For example, step 504 may comprise heating the liquid component to at least 80°C or at least 85°C. Alternatively or additionally, step 504 may comprise changing the pH of the liquid component. In a variant, step 504 is performed before step 304 and is thus operated on the slurry instead of the liquid component. In some embodiments, step 504 is omitted.

The final formulation step 305 may be the same as in the procedure 320A (Fig. 4A). In the illustrated example, step 305 comprises a step 305A of adding a vegetable oil to the liquid component. The addition of vegetable oil will at least partly shape the consistency of the NFB, for example to achieve a desired mouthfeel. The amount of vegetable oil depends on recipe but may be in the range of 0.1% to 5% by volume of the NFB. Step 305 further comprises a step 305B of mixing the vegetable oil with the liquid component to disperse the vegetable oil evenly throughout the liquid component, similar to a homogenization. Step 305B may be performed in a tank with a mixing device, such as a high-shear mixer Step 305 further comprises a step 305C of adding one or more further ingredients, for example as listed above, and admixing the ingredient(s) with the liquid component to form the NFB. It is understood that one or more ingredients may alternatively be admixed with the liquid component before step 305A or step 305B. Step 305 as shown in Fig. 5A may also be implemented in the procedure 320A (Fig. 4A).

The procedure 302B further comprises a step 505 of performing a pasteurization or sterilization of the NFB produced by step 305 and aims at eliminating or at least reducing microorganisms in the NFB before storage or packaging. Step 305 may be performed in accordance with any conventional procedure. Step 305 may be performed in a conventional heater, which may be configured for UHT treatment, ultra-pasteurization, or pasteurization. For example, the NFB may be heated to a temperature in the range of 135°C-150°C, for a period of time in the range of 4-30 seconds. Step 505 may also be implemented in the procedure 320A (Fig. 4A). In some embodiments, step 505 is omitted.

It is to be noted that the procedure 320B is merely given as an example. In a more general example, the procedure 320B may comprise, subsequent to generating the slurry in step 303, steps of performing an enzymatic treatment of the slurry, processing the slurry or the liquid component to deactivate enzymatic activity, mixing a vegetable oil with the liquid component to disperse the vegetable oil evenly throughout the liquid component, and pasteurizing or sterilizing the non-fermented beverage that is generated from the liquid component.

Fig. 5B is a block diagram of an example production line 20 which is configured to perform the procedure 320B in Fig. 5A. The production line 20 comprises a mixing station 21, which may be the same as in Fig. 4B. The mixing station 21 is configured to perform step 303, and optionally steps 501-502, if implemented. A yield enhancement station 24 is arranged to receive the slurry 200A from the mixing station 21. The yield enhancement station 24 is configured to perform step 503, by use of one or more enzymes 204. The yield enhancement station 24 may comprise one or more tanks, which may or may not include one or more mixing devices. A separation station 22 is arranged to receive the resulting enzymatically treated slurry 200A' from the yield enhancing station 24. The separation station 22 may be the same as in Fig. 4B. A deactivation station 25 is arranged to receive the liquid component 200B from the separation station 22 and configured to process the liquid component 200B to deactivate enzymatic activity, in accordance with step 504. A formulation station 23 is arranged to receive the liquid component 200B from the deactivation station 25. The formulation station 23 is configured to perform step 305, to admix one or more ingredients 201 into the liquid component 200B. The formulation station 23 may be the same as in Fig. 4B. In an alternative, the deactivation station 25 is arranged intermediate the yield enhancement station 24 and the separation station 22. A stabilization station 26 is arranged to receive the NFB from the formulation station 23 and configured to perform step 505 to stabilize the NFB by sterilization or pasteurization. The NFB 202 is then output from the stabilization station 26.

Fig. 5C is a block diagram of an example yield enhancement station 24, which may be included in the production line 20 of Fig. 5B. A first sub-station 241 is arranged to receive the slurry 200A and configured to perform the first enzymatic treatment in accordance with step 503A, by addition of one or more first enzymes 204A. A second sub-station 242 is arranged to receive the slurry from sub-station 241 and configured to adjust pH in accordance with step 503B, for example by addition of alkali or lye 204B. A third sub-station 243 is arranged to receive the slurry from sub-station 242 and configured to perform the second enzymatic treatment in accordance with step 503C, by addition of one or more second enzymes 204C. A fourth sub-station 243 is arranged to receive the slurry from sub-station 243 and configured to adjust pH in accordance with step 503D, for example by addition of acid or acid salt 204D. It should be noted that the separation into sub-stations 241-244 is optional. It is conceivable that two or more of steps 503A-503D are performed by the same equipment, by sequential addition of components 204A-204D.

In accordance with examples presented herein, some embodiments of a method for combined production of beer and NFB are recited in the following.

In some embodiments, the method comprises, before separating the slurry into the liquid component and the solid component, heating the slurry to a temperature of at least 100°C for a predefined time period.

In some embodiments, the method comprises, before separating the slurry into the liquid component and the solid component, processing the slurry to increase protein and/or dry matter content in the slurry.

In some embodiments, processing the slurry to increase protein and/or dry matter content comprises performing an enzymatic treatment of the slurry. In some embodiments, performing the enzymatic treatment comprises performing at least one of a first enzymatic treatment comprising an enzymatic breakdown of fibers in the slurry, or a second enzymatic treatment comprising an enzymatic breakdown of proteins in the slurry. In some embodiments, performing the enzymatic treatment comprises adding one or more enzymes to the slurry. In some embodiments, the one or more enzymes comprises one or more carbohydrases and/or one or more proteases. In some embodiments, the method comprises, before performing the enzymatic treatment, cooling the slurry to a temperature of less than 70°C.

In some embodiments, the method further comprises, subsequent to the enzymatic treatment, processing the slurry or the liquid component to deactivate enzymatic activity.

In some embodiments, the method further comprises processing the slurry to intermittently increase a pH of the slurry.

In some embodiments, the slurry is maintained at a temperature of at least 70°C until the slurry is separated into the liquid component and the solid component.

In some embodiments, the mixing of retentate material with water is performed at a temperature above at least 70°C.

In some embodiments, processing the liquid component into the non-fermented beverage comprises adding a vegetable oil to the liquid component. In some embodiments, processing the liquid component into the non-fermented beverage further comprises mixing the vegetable oil with the liquid component to disperse the vegetable oil evenly throughout the liquid component.

In some embodiments, the method further comprises packaging the non-fermented beverage in first containers for distribution, and packaging the beer in second containers for distribution, wherein the packaging of the non-fermented beverage is performed before the packaging of the beer.

In some embodiments, the method further comprises pasteurizing or sterilizing the non-fermented beverage.

The present disclosure also describes a plant, which comprises a first production line configured to process grain material into a mash, separate the mash into a fermentable wort and retentate, process the fermentable wort into beer, and output the beer; a second production line configured to process retentate material comprising at least a portion of the retentate into a slurry, separate the slurry into a liquid component and a solid component, process the liquid component into a non-fermented beverage, and output the non-fermented beverage; and a transportation arrangement configured to transport the retentate material from the first production line to the second production line.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims. Further, while operations are depicted in the drawings in a particular order, this should not be understood as requiring that such operations be performed in the particular order shown or in sequential order, or that all illustrated operations be performed, to achieve desirable results.

## Claims

1. A method of combined production of beer and a non-fermented beverage from grain material, comprising:
processing (301) the grain material into a mash;
separating (302) the mash into a fermentable wort and a retentate (R1);
processing (303) a retentate material (R2) into a slurry, wherein the retentate material (R2) comprises at least a portion of the retentate (R1);
separating (304) the slurry into a liquid component and a solid component;
processing (305) the liquid component into the non-fermented beverage;
processing (306) the fermentable wort into the beer;
outputting (307) the non-fermented beverage; and
outputting (309) the beer.

2. The method of claim 1, wherein said processing (303) the retentate material is initiated by adding (303B) water to the retentate material (R2).

3. The method of claim 2, wherein said processing (303) the retentate material comprises mixing (303C) the retentate material (R2) with the water.

4. The method of any preceding claim, wherein said processing (303) the retentate material is initiated within a predefined maximum time (Δmax) from said separating (302) the mash.

5. The method of claim 4, wherein the predefined maximum time (Δmax) is less than 8, 6, 4 or 2 hours.

6. The method of claim 4 or 5, wherein a time period (ΔP2) from initiation of said processing (303) the retentate material to said outputting (307) the non-fermented beverage is equal to or less than the predefined maximum time (Δmax).

7. The method of any preceding claim, wherein the retentate material (R2) is obtained without active processing for modification of said at least a portion of the retentate (R1).

8. The method of any preceding claim, wherein the non-fermented beverage is output (307) before said processing (306) the fermentable wort is completed.

9. The method of any preceding claim, wherein the retentate (R1), when generated by said separating (302) the mash, and the retentate material (R2) have approximately the same relative water content.

10. The method of any preceding claim, wherein the retentate material (R2) has a relative water content in a range of 60% to 90%, and preferably in a range of 70% to 85%.

11. The method of any preceding claim, wherein the retentate (R1), when generated by said separating (302) the mash, has a temperature in a range of 55°C to 90°C, preferably above 65°C or above 70°C, and preferably below 85°C or below 80°C.

12. The method of any preceding claim, wherein the retentate material (R2), when said processing (303) the retentate material is initiated, has a temperature in a range of 40°C to 99°C, preferably above 50°C or above 55°C, and preferably below 85°C or below 80°C.

13. The method of any preceding claim, wherein the retentate material (R2), when said processing (303) the retentate material is initiated, has a temperature that is equal to or less than the temperature of the retentate (R1) when generated by said separating (302) the mash.

14. The method of any preceding claim, wherein a temperature difference between the retentate material (R2) and the retentate (R1) is less than 15°C, and preferably less than 10°C or less than 5°C.

15. The method of any preceding claim, further comprising: performing (503A, 503C) an enzymatic treatment of the slurry; processing (504) the slurry or the liquid component to deactivate enzymatic activity; mixing (305B), in said processing (305) the liquid component into the non-fermented beverage, a vegetable oil with the liquid component to disperse the vegetable oil evenly throughout the liquid component; and pasteurizing or sterilizing (505) the non-fermented beverage.
